# EUROPEAN PATENT SPECIFICATION

(11) **EP 0 360 338 B1**
(45) Date of publication and mention of the grant of the patent: **29.06.1994**
(21) Application number: 89202327.6
(22) Date of filing: 15.09.1989
(51) Int. Cl.: H04B 1/20

(54) **Local communication bus system comprising a set of interconnected devices, a control bus, and a set of signal interconnections, and a device and a switchbox for use in such system**
Örtliches Kommunikationsbussystem mit einer Anzahl miteinander verbundener Einrichtungen, einem Steuerbus und einer Anzahl von Signalverbindungen, sowie einer Einrichtung und einem Schaltkasten zur Verwendung in einem derartigen System
Système omnibus local de communication comportant un groupe de dispositifs interconnectés, un bus de commande et une série d'interconnexions de signal, ainsi que dispositif et coffret de distribution destinés à un tel système

(30) Priority: 21.09.1988 GB 8822193
(43) Date of publication of application: 28.03.1990
(73) Proprietor: Philips Electronics N.V., 5621 BA Eindhoven (NL)
(72) Inventor: Van Steenbrugge, Bernard, NL-5656 AA Eindhoven (NL); De Leeuw, Henricus Franciscus Adrianus, NL-5656 AA Eindhoven (NL); Mastroyiannis, Mihalis Efthimios, NL-5656 AA Eindhoven (NL)
(74) Representative: Strijland, Wilfred

(56) References cited:
- EP-A- 0 257 684

## Description

The invention relates to a local communication bus system comprising a serial control bus attached to a plurality of devices, that are furthermore pairwise interconnected by respective signal interconnections and include at least one plural-interconnected switchbox means, said system being able to establish a signal path between an initiating or source station and a destination station. A single-channel control bus has been described in EP 257 684. The reference allows only for direct interconnection of the devices, and therein needs relatively much centralized intelligence. The reference does not allow to interconnect devices via intermediate stations such as switchboxes. Such a communication bus is particularly suited for transfer of control signals between various devices for consumer entertainment, devices for executing household chores, and devices for producing various maintenance and management control signals in a domestic environment. Serial in this context means that the information transmitted is represented by at most two wire signals, any other wire being exclusively used for controlling and/or synchronizing the transfer. In addition to the control bus, the various devices are pairwise interconnected by signal interconnections. Herein, pairwise means that either exactly two devices are interconnected, or that one particular device operates as signal source, whereas the others function exclusively as signal destinations. An example would be one audio amplifier that can selectively power either one of two (or more) loudspeaker boxes. The signals may be analog or digital and may relate to audio or video information or other. Certain devices, although attached to the control bus, need not be interconnected to such signal interconnection inasmuch as they have little or no signal handling facilities, such as switches, sensors etcetera. For these devices, the control bus would provide a data path of sufficient transport capability. Particular properties of such system are the low level of data processing facilities of many of the interconnected devices, and also the frequent configuration changes encountered inasmuch as many devices are portable and liable to plugging and unplugging in various physical attachment points of the control bus. In typical circumstances, such control bus could be wired to all rooms of a house or appartment and in each wired room have one or more wall-mounted plugs. Of course simpler configurations would also do. The devices often have only a single signal interconnection; anyway, the switchbox means have at least two such signal interconnections, typical values are four to six.

### SUMMARY TO THE INVENTION

Among other things, it is an object of the present invention to allow for easy and error-free establishment of a signal path between a source device and a destination device without the need for either a central control device or for the storage of all present and valid pairwise signal interconnections in each relevant device, but allowing for only the storage in each device of a local interconnection table. The invention, according to one of its aspects, thereto provides a local communication bus system comprising a serial control bus attached to a plurality of devices that furthermore are plug to plug pairwise interconnected by respective signal interconnections and include at least one plural-plug switchbox means, said system for establishing and specifying a signal path between a source device and a destination device comprising:
- in each respective device, interconnection table means interrogatibly storing information indicating any other device pairwise interconnected to said respective device, and the plug pair so interconnecting that other device;
- in said source device first message generating means for generating, in case said source device and destination device are not pairwise interconnected, on said control bus a messaged Connect control command directed to any first switchbox means pairwise connected to said source device and indicating said destination device and in conjunction therewith a messaged Select control command directed to said destination device for thereto signalling and specifying said establishing;
- in the first switchbox means so directed at, interrogating means for interrogating its interconnection table means for identifying the plug connected to said destination device if any, and control means for in the negative case controlling said first switchbox means as secondary source device for producing a further Connect control command to any second switchbox means connected thereto, until after a first sequence of such Connect control commands the destination device is reached, thereby said path is identified as a second sequence of such pairwise interconnections, between associated plug pairs, starting from said source device and terminating in said destination device, whereby said destination device is activated by said Select control signal for effecting the intended signal transfer, said system comprising activating means for in an initializing state activating said interconnection table means.
In this respect, the source device is the source of the control message; on the level of the signal transfer it may operate either as signal source, or as signal destination. Now each device has an interconnection table that must only store a list of all local plugs, explicit or implicit, the name or other indication of the device connected thereto, and the latter device's plug used for realizing the connection. The plug may be a physically separated interconnection to a single signal path that is privy to the devices interconnected thereby, the switching being by means of physically exerting connections and disconnections, as the case may be. Alternatively, the switchbox means may interconnect its plugs by means of frequency selecting, in that the signal frequency band on a first plug determines which of the other, frequency-sensitive plugs be connected thereto. In consequence, frequency multiplexing is effected on the first plug. Each switchbox, at any time may interconnect two or more of its plugs, or interconnect plural pairs of its plugs.

Now, if the first switchbox means is not pairwise connected to the intended destination device, it will, by means of the control bus, operate as secondary source device and search any further switchbox means pairwise connected to it; this operation may be executed in a tree organization. In general, the search will terminate after accessing of only a few switchbox means in sequence.

In the above, the Connect control command indicates which device is to operate as destination device (for the control); the Select control command indicates what the destination device is supposed to do. For example, for a video cassette recorder this signal may specify whether the recorder must record video or reproduce video, and for a monitor whether the signal format is YUV or RGB, the operation of the monitor depending thereon.

### FURTHER ASPECTS OF THE INVENTION

The invention also relates to a device for use in such system and possibly having various interconnected subdevices, among which at least one switchbox interfacing to other devices.

The invention also relates to a switchbox operating as a device or subdevice.

Further advantageous aspects to the invention are recited in dependent Claims.

### BRIEF DESCRIPTION OF THE FIGURES

The invention will be disclosed in more particular detail with respect to the appended drawing, in which:
Figure 1 is a block diagram of an elementary system for use with the invention;
Figure 2 is a more elaborated block diagram of such system;
Figure 3 illustrates a message format;
Figure 4 is a block diagram of a switchbox.

### DESCRIPTION OF AN EMBODIMENT AS PREFERRED

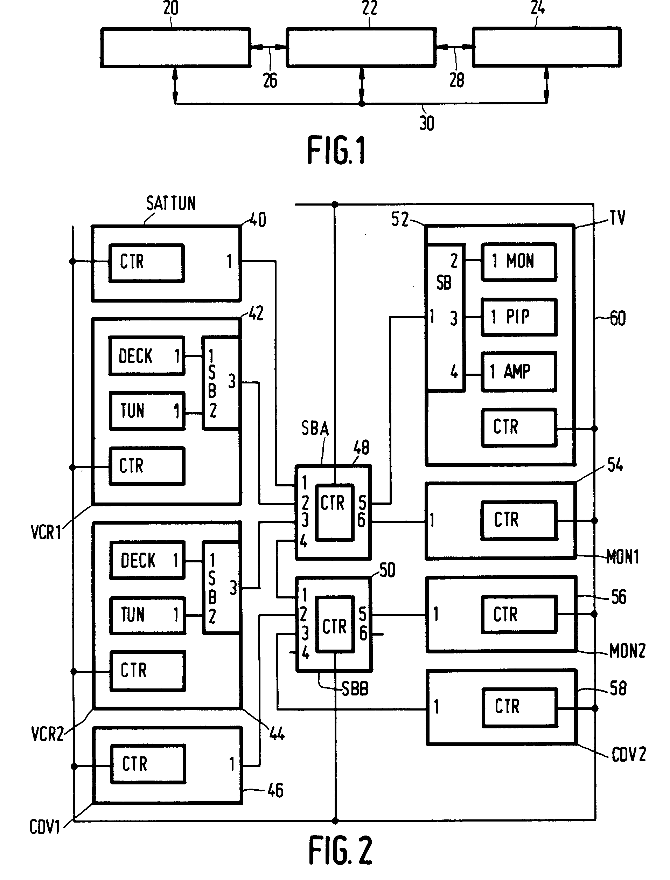

Figure 1 is a block diagram of an elementary system for use with the invention. The system comprises three devices 20, 22, 24, among which device 22 is a switchbox. Interconnections 26, 28 are high volume signal interconnections, for example, for digital or analog video signals. Interconnection 30 is a serial control bus for relatively low volume messaged control signals.

Figure 2 is a more elaborated block diagram of an embodiment for use with the invention. The system is typically video-oriented. Of course, audio-oriented, audio/video-mixed, and other orientations would be feasible as well. There are ten devices: satellite tuner 40, video cassette recorders 42, 44, compact disc video players 46, 58, video monitors 54, 56, TV apparatus 52 and switchboxes 48, 50. Video cassette recorder 42 has as subdevices a cassette deck -DECK-, a video tuner TUN, a control element CTR and a local switchbox SB. TV apparatus 52 has as subdevices monitor MON, picture-in-picture generator PIP, video amplifier AMP, control element CTR, and local switchbox SB. All devices have a control element CTR. All plugs of devices and/or subdevices to the signal interconnections are numbered. These numbers relate to a locally valid plug sequence. All control devices are attached to single-path control bus 60. This may be a coax, twisted pair or optical bus, for example. The control devices will control various operations of the device and, if applicable, its subdevices. In the embodiment shown the various signal interconnections are all physically separate. Other solutions are possible; for example, interconnections 3 and 5 of switchbox 50 could operate in frequency multiplex with respect to a source signal interconnection of which the frequency band determines which one of monitors 56, 58 is going to effect display. To this effect, the switchbox means may comprise a selectively activatable frequency convertor, or the signal source may already effect such conversion.

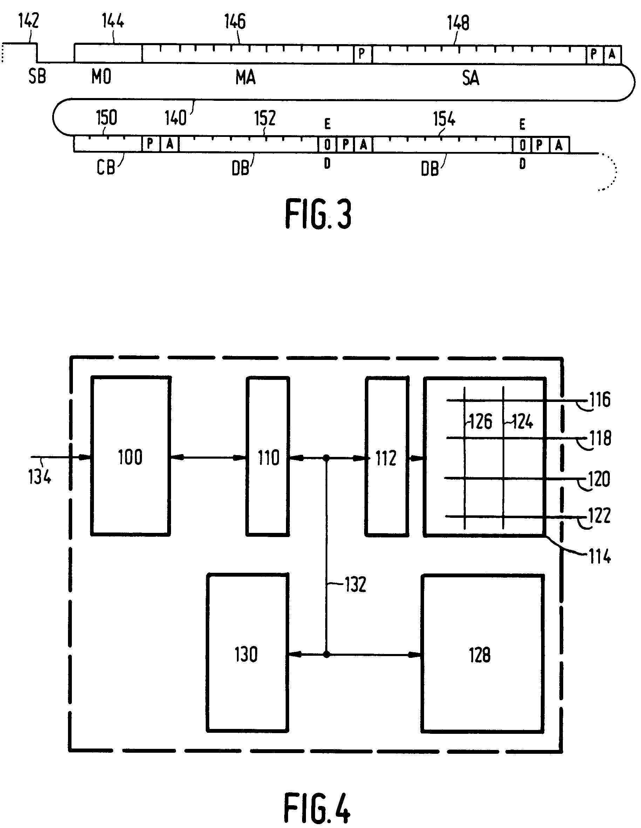

Figure 3 illustrates a message format on the control bus. The physical bit shape has been described in the reference. The time has been indicated as curve 140 on which the bits form a contiguous sequence. Start bit 142 is followed by mode indication 144 (1-3 bits) indicating an intended bit cell frequency. Indication 146 contains 12 bits source addres plus parity P. Indication 148 contains a 12 bit slave address plus parity P and acknowledge bit A to be generated by the intended destination on the control bus, which is not necessarily the destination station of the signal path to be established, where it may also be any intermediate station along this path. Indication 150 is a four bit control signal plus parity P and acknowledge signal A. Indications 152, 154 relate to the data bytes, inclusive of an end-of-data signalization, a parity bit, and an acknowledge bit. Control information 150 relates to the operation of the single channel bus and the control devices CTR connected thereto. Data bytes 152, 154 on this level operate as data that just are transmitted. On the next level, they may operate as either data, address, or control information for the various local (sub)devices.

### SPECIFICATION OF SIGNALS AND OPERATION IN A TYPICAL EMBODIMENT

Hereinafter various signals to be used for control functions are specified, and also an example of operation in a typical embodiment. Now, for any plug in a subdevice it is known to which other subdevice and plug on that subdevice it is connected physically. For internal connections between a switchbox subdevice and a signal source or signal destination subdevice all in the same device this is known beforehand (e.g. programmed by the device manufacturer); for external connections (signal connector cables) it is given by the user at initialization time. For systems of low complexity, the necessary information is procured according to the so-called -default- principle that is generally used in personal computers and the like.

Furthermore, any switchbox subdevice knows its current internal interconnections. This means for each of its plugs, the identity of any other plug (zero or more) to which it is currently internally interconnected. All control commands to be specified hereinafter are formatted in the messaged format explained with respect to Figure 3.

To build up a signal interconnection the bus commands Connect and Select are used. Connect is a command for switchbox (sub)devices. It defines a signal interconnection between a plug of that switchbox (sub)device and another (sub)device that is a source or destination of a signal stream. This latter (sub)device may be directly connected to the switchbox (sub)device, or it may be connected via one or more switchboxes in between. The Select command is directed to signal source and signal destination (sub)devices; it informs a signal source (sub)device that it should supply a signal; or a signal destination (sub)device that it will receive a signal; also, further specifying information is included.

To release a signal interconnection the commands Disconnect, Deselect-subdevice and Deselect-plug are used. Disconnect is a command for switchbox (sub)devices. This command has the same operands categories as the Connect command: it is used to release a signal path that has been built with a Connect command.

Deselect-subdevice is a command for signal destination (sub)devices and signal source (sub)devices. It is used to inform such a (sub)device that it will not receive a signal anymore, or that it no longer needs to produce signals, respectively.

Disconnect-plug is a command for switchbox (sub)devices. It is used to inform the switchbox that the signal path via the given plug is no longer needed.

Furthermore, to investigate a current signal interconnection a number of requests are used; these are also transmitted on the control bus.

The Connected request is used to verify if the latest Connect command was successful. It is a request for switchbox (sub)devices.

The Connected-to-subdevices request is a request for signal source and signal destination (sub)devices. It is used to investigate if such a (sub)device is currently active, and if so, to what other (sub)device and plug on that subdevice it has currently a signal interconnection.

The Connected-to-switchbox request is a request for switchbox (sub)devices. It is used to investigate for a given plug of that switchbox, to which other (sub(devices and plugs on these (sub)devices the given plug has currently signal interconnections.

These last two requests (Connected-to-subdevice and Connected-to-switchbox) result in the directly connected subdevices and plugs (if any). The connection in question may be inside the device if switchbox and connected subdevice are both subdevices of the same device, otherwise, it is a signal cable from the switchbox to a plug in another device.

Hereinafter, three examples of the use of the above-mentioned commands will be given:
For example, suppose that CDV-device 46 in Figure 2 wants to play on (TV, PIP) (52) and therefore must make a signal connection to (TV, PIP).
The following control bus commands and requests can be used to achieve this; the bus messages address the devices and subdevices by name; it is not necessary that the message orginator knows where the message destination device is located physically.

### CDV (46):

- CDV sends to Switchbox 50 the command Connect plug 2 to (TV, PIP).
- CDV sends to Switchbox 50 Request Connected plug 2 to (TV, PIP).
- CDV repeats this question periodically until an answer "Connected" or "Not connected" is received.

### Switchbox (50)

- receives bus Connect command from CDV, and therefore issues another bus Connect command to switchbox 48 in the same way CDV 46 had done earlier to switchbox 50. The parameters for the Connect command are plug 4 (of switchbox 48) and (TV, PIP). No other device receives this command, because in switchbox 50 no TV-PIP subdevice is known to be directly connected to switchbox 50 and also, no other switchbox subdevice than switchbox 48 is directly connected to switchbox 50.

However, in more complicated situations, it could prove necessary to exectue a tree-like search by means of the bus commands/requests through the interconnected switchbox (sub)devices. It should be noted that there is no à priori restriction to the interconnection pattern of the switchboxes. In connection with the above Connect command, switchbox 50 issues to switchbox 48 the Request connected with the same parameters (plug 4, TV, PIP). Again, this latter request is repeated until an answer, either "Connected" or "Not connected" is received. If the answer received is "Connected", the switchbox 50 makes internally a connection between its plugs 2 (connected to CDV 46) and 1 (connected to switchbox 48). The answer to the Connected request issued by the CDV 48 is now "Connected". If the answer received by switchbox 50 is "Not connected", switchbox 50 does not make any new interconnection between its plugs. If applicable, any existing interconnection is left active. The answer given by switchbox 50 to the Connected request issued by the CDV device 46 is now "Not connected".

### Switchbox 48:

Switchbox receives the Connect command and the Connected request from switchbox 50. Initially, it does not know to which of the other switchboxes (SB) in devices VCR1 (42), VCR2 (44) and TV (52) the subdevice TV-PIP is actually connected. Therefore, it successively interrogates all of those three switchboxes. As regards the switchbox of TV device 52, the parameters of the command are (plug 1, TV, PIP). As regards the switchbox of device VCR1 (42), the parameters are (plug 3, TV, PIP). The latter command would obviously be not successfull, and upon reception of the ensuing answer "Not connected", the switchbox 48 would, if applicable, turn to interrogating another switchbox. In the case of switchbox TV, SB a "Connected" answer would result, and the switchbox 48 will then make the connection between its plugs 4 (connected to switchbox 50) and 5 connected to switchbox SB in device 52. The reaction to a "Not connected" answer has been described earlier.

### Switchbox in device TV 52:

This receives the Connect command from switchbox 48 and therefore:
- issues a Select command to the PIP inside the TV
- makes internal connection plug 1 - plug 3
- (TV, SB) answers to a Connected request from switchbox: "Connected". PIP in TV:
- receives the Select command from (TV, SB) and starts displaying the signal received on the signal interconnection now activated.
Next, the operation for changing an interconnection is described. This may imply that in a particular switchbox device one interconnection is made (or a plurality of interconnections is made), while one or more other interconnections are interrupted. For example, say connection 2 - 5 holds in the switchbox 48, and the switchbox is changed to connection 2 - 6 (and connection 2 - 5 is now broken). Now the following commands are issued.

### Switchbox:

- because connection to plug 5 of the switchbox is broken: Switchbox to (TV, SB): Deselect-plug 1.

### SB in TV:

- receives the "Deselect-plug 1" command from Switchbox.
- say plug 1 of (TV, SB) is currently connected to plug 2 of (TV, SB).

Then (TV, SB) issues the command "Deselect-subdevice" to (TV, Mon), because plug 2 of (TV, SB) is connected to (TV, Mon).

### Mon in TV:

- receives the "Deselect-subdevice" command. This means that it does not receive signal input anymore. Therefore (TV, Mon) may decide to go in standby, for example.

In case the channel to be broken runs through more switchboxes a similar search may be made as the one executed for setting up a connection. However, inasmuch as every (sub)device know its internal connections realized for setting up the path, the search can follow this path and thus be executed more quickly. In conjunction to the disconnection operation, the changed interconnection may be activated in the same manner as described earlier.

Next, the operation for tracing an actual connection is described.

For example, suppose that the deck of VCR1 (42) wants to know the source of a monitor signal, that is, in fact, provided by Monitor device 56. However, initially this information is not present in device 42. The following requests are now used. First, the initiating subdevice (VCR1, Deck) issues a Connect-to-Subdevice request to Monitor 56. If this monitor is in an active state, it will then answer that it is connected to plug 50 of switchbox 50. Thereupon, subdevice (VCR1, Deck) issues a "Connected to Switchbox 50, plug 5" request to switchbox 50. In case plugs 1, 5 of switchbox 50 are presently interconnected, switchbox 50 will answer to this request -plug 4 of switchbox 48-. Now, in switchbox 48 plugs 3 and 4 may be interconnected, the former being connected the switchbox subdevice of VCR2 (44). Thus, upon being addressed by means of the "connected to switchbox 48, plug 4 connected-to-subdevice" request, switchbox 48 will answer by "plug 3 of (VCR2, SB)". Finally, subdevice (VCR1, Deck) issues the "connected to switchbox VCR2, SB), plug 3 to subdevice (VCR2, SB). Say, plug 3 of (VCR2, SB) is currently connected to plug 1 of (VCR2, SB). This plug is connected to (VCR2, Deck). Hence (VCR2, SB) answers on the request: (VCR1, Deck).

(VCR1, Deck) now knows that Monitor has a signal connection to (VCR2, Deck). (VCR1, Deck) may now send to (VCR2, Deck) a request to verify if it is active.

Now, the requests and commands contain various operands and control codes. The device address normally has twelve bits, subdivided into three fields: the service type (e.g. specifying audio-video devices) of 4 bits, the device type of 5 bits, and the device number of 3 bits. Together with 4 stuffing bits, this fills two message bytes. In similar way, a 10 bit subdevice address is defined. The plug number is specified in one byte; 64 different values are defined. A connect command has one byte opcode, two operands specifying plug number and device/subdevice address of input and output of the connection, respectively. Disconnect command differs primarily with respect to the opcode. Select command has one byte opcode; it may specify a signal type. No address parameter is necessary. Deselect-subdevice command has similar format Deselect-plug command has the same format, enhanced with a plug number. Connected request has one byte opcode, two operands, specifying plug number and device/subdevice address. The answer contains one or two bytes to the originator of the request, specifying the result. Connected to subdevice request primarily consists of one byte opcode. The answer may specify the following:
- subdevice in standby (only 2 opcode bytes);
- subdevice active; specifying device/subdevice address and signal type communicated with connected (sub)device;
- idem, externally connected to switchbox; specifying device/subdevice, signal type and plug number.
Connected to switchbox request specifies request code and plug number. The anser specifies the plug number(s), and the relevant device/subdevice addresses.

### EXAMPLE OF A SWITCHBOX DEVICE

Figure 4 is a block diagram of a switchbox (sub)device. Line 134 indicates a single-channel control bus according to the reference. Thereto, element 100 is the interface that accounts for arbitrage on the bit level, recognizing the own address of the switchbox, formatting messages and extracting data. Such data then is sent to byte register 110. Register 110 interfaces to internal bus 132, on which traffic is controlled by processor 130 according to general data processing principles. Generally no specification of address/data/control paths has been given. Processor 130 interrogates register 110, decodes various opcode and other control bytes and if necessary, controls interconnection of the four signal connections 116...132 by means of cross-bar arrangement 114; by means of two leads 124, 126 two arbitrary pairs can be formed between connections 116...122. The actual control is effected by register 112, that is also loaded by processor 130 via bus 132. The data, such as device/subdevice addresses/plug numbers/signal types relating to the four connections 116...122 are memorized in interconnection RAM 128 which has allocated respective storage space to each of connections 116...122. Processor 130 thus continually controls all other elements. With respect to the signals on connections 116...122 the switchbox is organizationally passive. For simplicity, organization on a lower level than processor 130 has not been shown: program store, ALU, instruction decoding, register stack, data RAM, bus interface to bus 132, all generally may be of conventional construction.

The other devices may have a similar set-up. However, inasmuch as they have only one signal interconnection, no cross-bar 114 is necessary and also, other control is simplified. Notably, the interconnection RAM may be replaced by one or only a few hardware registers. On another level, such other devices could be of far greater complexity than the switchbox, but this latter complexity is unrelated to the tactics of the network function.

## Claims

1. Local communication bus system comprising a serial control bus (60) attached to a plurality of devices (40-58) that furthermore are plug to plug pairwise interconnected by respective signal interconnections and include at least one plural-plug switchbox (48,50), said system for establishing and specifying a signal path between a source device and a destination device being characterized by comprising:
- in each respective device, interconnection table means interrogatably storing information indicating any other device pairwise interconnected to said respective device, and the plug pair so interconnecting that other device;
- in said source device first message generating means for generating in case said source device and destination device are not pairwise interconnected, on said control bus a messaged Connect control command directed to any first switchbox means pairwise connected to said source device and indicating said destination device and in conjunction therewith a message Select control command directed to said destination device for thereto signalling and specifying said establishing;
- in the first switchbox means so directed at interrogating means for interrogating its interconnection table means (128) for identifying the plug connected to said destination device if any, and control means (130) for in the negative case controlling said first switchbox means as secondary source device for producing a further Connect control command to any second switchbox means connected thereto, until after a first sequence of such Connect Control Commands the destination device is reached, thereby said path is identified as a second sequence of such pairwise interconnections, between associated plug pairs, starting from said source device and terminating in said destination device, whereby said destination device is activated by said Select control command for effecting the intended signal transfer, said system comprising activating means for in an initializing state activating said interconnection table means.

2. A local communication bus system as claimed in Claim 1, wherein said source device has second message generating means for generating on said control bus a messaged Disconnect control command to said first switchbox and indicating said destination device, and in conjunction therewith a messaged first Deselect control command for to said destination device signalling said signal path as disconnectable; and wherein the first switchbox means so directed at has repeat means for repeating said interrogating for identifying said plug for release, and in the negative case generating a further messaged Disconnect control command to said further switchbox means until said path is reidentified for releasing any device located within said path, thereby deactivating said destination device with respect to said path.

3. A system as claimed in Claim 1 or 2, wherein said first message generating means comprise first producing means for producing a Connect command specifying an intended signal path between a particular plug of a switchbox subdevice and a particular destination (sub)device, and second producing means for producing a Select command in forming said destination (sub)device of an intended signal transfer, and specifying such transfer.

4. A system as claimed in Claim 2, wherein said second message generating means comprise third producing means for producing a Disconnect command specifying an abandonable signal path between a particular plug of a switchbox (sub)device and a particular destination (sub)device, fourth producing means for producing a Deselect-subdevice command informing the destination (sub)device of a terminatable signal transfer, and fifth producing means for producing a Deselect plug command informing a particular switchbox means of a terminatable signal transfer with respect to a particular plug of the latter switchbox means.

5. A system as claimed in any of Claim 1 to 4, wherein said serial control bus is a single-channel bus.

6. A device for use as a source device in a local communication bus system comprising a serial control bus (60) attached to a plurality of devices (40-58) that furthermore are plug to plug pairwise interconnected by respective signal interconnections and include at least one plural-plug switchbox means (48,50) said system for establishing and specifying a signal path between a source device and a destination device being characterized by comprising:
- in each respective device, interconnection table means interrogatably storing information indicating any other device pairwise interconnected to said respective device, and the plug pair so interconnecting that other device;
- said source device comprising first message generating means for generating, in case said source device and destination device are not pairwise interconnected, on said control bus a messaged Connect control command directed to any first switchbox means pairwise connected to said source device and indicating said destination device and in conjunction therewith a messaged Select control command directed to said destination device for thereto signalling and specifying said establishing;
- wherein said first message generating means has request producing means for after said Control command persistently producing a Connected Request signal to evoke either a positive or a negative answer from said destination (sub)device or any other (sub)device in a second sequence of pairwise interconnections between the source device and an ultimately reached destination device.

7. A device as claimed in Claim 6, comprising second request producing means for producing a Connected-to-subdevice request signal for investigating an activity of a particular (sub)device and in an active situation thereof investigating to which plug on which other (sub)device the particular (sub)device was communicating.

8. A device as claimed in Claim 6 or 7, comprising third request producing means for producing a Connected-to-switchbox request signal for investigating for a particular plug of a particular switchbox means to which other (sub)device and plug(s) on these other subdevices the particular plug has an active signal interconnection.

9. A device as claimed in Claims 6, 7 or 8, comprising a switchbox subdevice and at least two further subdevices, said further subdevices being pairwise connected to said switchbox subdevice by means of respective signal interconnections, said switchbox subdevice realizing any signal connection outside said device, said switchbox subdevice having interconnection table means containing a table indicating any subdevice and plug pair interconnected within said device.

10. Switchbox means for use in a local communication bus system comprising a serial control bus (60) attached to a plurality of devices (40-58) that furthermore are plug to plug pairwise interconnected by respective signal interconnections and include at least one plural-plug switchbox means (48,50), said system for establishing and specifying a signal path between a source device and a destination device being characterized by comprising:
- in each respective device, interconnection table means interrogatably storing information indicating any other device pairwise interconnected to said respective device, and the plug pair so interconnecting that other device;
- in said source device first message generating means for generating, in case said source device and destination device are not pairwise interconnected, on said control bus a messaged Connect control command directed to any first switchbox means pairwise connected to said source device and indicating said destination device and in conjunction therewith a messaged Select control command directed to said destination device for thereto signalling and specifying said establishing;
- said switchbox means comprising interrogating means for interrogating its interconnection table means (128) for identifying the plug connected to said destination device if any, and control means (130) for in the negative case controlling said switchbox means as secondary source device for producing a further Connect control command to any second switchbox means (48,50) connected thereto.

## Patentansprüche

1. Örtliches Kommunikationsbussystem, das einen seriellen Steuerbus (60) umfaßt, der an eine Vielzahl von Einrichtungen (40-58) angeschlossen ist, die außerdem paarweise von Stecker zu Stecker durch entsprechende Signalverbindungen miteinander verbunden sind und mindestens einen Schaltkasten mit mehreren Steckern (48, 50) enthalten, wobei dieses System einen Signalpfad zwischen einer Ausgangseinrichtung und einer Zieleinrichtung schafft und vorgibt, dadurch gekennzeichnet, daß es folgendes umfaßt:
- in jeder Einrichtung Verbindungstabellenmittel, die abfragbar Informationen über jede andere mit dieser Einrichtung paarweise verbundene Einrichtung und das Steckerpaar zur Verbindung der anderen Einrichtung speichert;
- in der Ausgangseinrichtung ein erstes Nachrichtengenerierungsmittel zum Generieren eines Nachrichtensteuerbefehls Verbinden im Steuerbus, wenn die Ausgangs- und die Zieleinrichtung nicht paarweise miteinander verbunden sind, der an das erste paarweise mit der Ausgangseinrichtung verbundene Schaltkastenmittel adressiert wird und die Zieleinrichtung angibt, und im Zusammenhang damit eines an die Zieleinrichtung adressierten Nachrichtensteuerbefehis, um dieser die Herstellung der Verbindung zu signalisieren und vorzugeben;
- im ersten adressierten Schaltkastenmittel Abfragemittel zur Abfrage seines Verbindungstabellenmittels (128) zur Identifizierung des mit der Zieleinrichtung verbundenen Steckers (falls vorhanden), und wenn dies erfolglos ist, Steuermittel (130) zum Steuern des ersten Schaltkastenmittels als zweite Ausgangseinrichtung zum Erzeugen eines weiteren Steuerbefehls Verbinden an ein damit verbundenes zweites Schaltkastenmittel, bis nach einer ersten Folge derartiger Steuerbefehle Verbinden die Zieleinrichtung erreicht wird, womit der Pfad als zweite Folge solcher paarweisen Verbindungen zwischen zusammengehörigen Steckerpaaren von der Ausgangseinrichtung bis zur Zieleinrichtung festgelegt wird, wodurch die Zieleinrichtung durch den Steuerbefehl Auswählen eingeschaltet wird, um die vorgesehene Signalübertragung zu bewirken, wobei das System Einschaltmittel zum Aktivieren des Verbindungstabellenmittels im Initialisierungszustand umfaßt.

2. Örtliches Kommunikationsbussystem nach Anspruch 1, dadurch gekennzeichnet, daß die Ausgangseinrichtung ein zweites Nachrichtengenerierungsmittel zum Generieren eines Nachrichtensteuerbefehls Trennen an den ersten Schaltkasten im Steuerbus und zur Angabe der Zieleinrichtung und im Zusammenhang damit eines ersten Nachrichtensteuerbefehls Deaktivieren zum Signalisieren an die Zieleinrichtung, daß der Signalpfad getrennt werden kann, hat, und daß das derart adressierte erste Schaltkastenmittel Wiederholungsmittel zum Wiederholen der Abfrage für die Identifizierung des Steckers zum Abbau der Verbindung und, falls erfolglos, zum Generieren eines weiteren Nachrichtensteuerbefehls Trennen an das weitere Schaltkastenmittel hat, bis der Pfad für den Verbindungsabbau aller im Pfad angeordneten Einrichtungen neu festgelegt ist, wodurch die Zieleinrichtung bezüglich des Pfads deaktiviert wird.

3. System nach Anspruch 1 oder 2, dadurch gekennzeichnet, daß das erste. Nachrichtengenerierungsmittel ein erstes Erzeugungsmittel zum Erzeugen eines Befehls Verbinden, der einen vorgesehenen Signalpfad zwischen einem bestimmten Stecker einer Schaltkasten-Untereinrichtung und einer bestimmten Ziel-(Unter-)Einrichtung vorgibt, und ein zweites Erzeugungsmittel zum Erzeugen eines Befehls Auswählen, der die Ziel-(Unter-)Einrichtung von einer vorgesehenen Signalübertragung informiert und die Übertragung vorgibt, umfaßt.

4. System nach Anspruch 2, dadurch gekennzeichnet, daß das zweite Nachrichtengenerierungsmittel ein drittes Erzeugungsmittel zum Erzeugen eines Befehls Trennen, der einen nicht mehr benötigten Signalpfad zwischen einem bestimmten Stecker einer Schaltkasten-(Unter-)Einrichtung und einer bestimmten Ziel-(Unter-)Einrichtung vorgibt, ein viertes Erzeugungsmittel zum Erzeugen eines Befehls Deaktivieren Untereinrichtung, der die Ziel-(Unter-)Einrichtung von einer beendbaren Signalübertragung informiert, und ein fünftes Erzeugungsmittel zur Erzeugung eines Befehls Deaktivieren Stecker, der ein bestimmtes Schaltkastenmittel von einer beendbaren Signalübertragung in Bezug auf einen bestimmten Stecker dieses Schaltkastenmittels informiert, umfaßt.

5. System nach einem der Ansprüche 1 bis 4, dadurch gekennzeichnet, daß der serielle Steuerbus ein Einkanalbus ist.

6. Einrichtung zur Verwendung als Ausgangseinrichtung in einem örtlichen Kommunikationsbussystem, die einen seriellen Steuerbus (60) umfaßt, der an eine Vielzahl von Einrichtungen (40-58) angeschlossen ist, die außerdem parrweise von Stecker zu Stecker durch entsprechende Signalverbindungen miteinander verbunden sind und mindestens einen Schaltkasten mit mehreren Steckern (48,50) enthalten, wobei dieses System einen Signalpfad zwischen einer Ausgangseinrichtung und einer Zieleinrichtung schafft und vorgibt, dadurch gekennzeichnet, daß es folgendes umfaßt:
- in jeder Einrichtung Verbindungstabellenmittel, die abfragbar Informationen über jede andere mit dieser Einrichtung paarweise verbundene Einrichtung und das Steckerpaar zur Verbindung der anderen Einrichtung speichert;
- in der Ausgangseinrichtung ein erstes Nachrichtengenerierungsmittel zum Generieren eines Nachrichtensteuerbefehls Verbinden im Steuerbus, wenn die Ausgangs- und die Zieleinrichtung nicht paarweise miteinander verbunden sind, der an das erste paarweise mit der Ausgangseinrichtung verbundene Schaltkastenmittel adressiert wird und die Zieleinrichtung angibt, und im Zusammenhang damit eines an die Zieleinrichtung adressierten Nachrichtensteuerbefehls Auswählen, um dieser die Herstellung der Verbindung zu signalisieren und vorzugeben;
- wobei das erste Nachrichtengenerierungsmittel Anforderungserzeugungsmittel aufweist, um nach dem Steuerbefehl ständig ein Anforderungssignal Verbunden? zu erzeugen, um entweder die Antwort Ja oder Nein von der Ziel-(Unter-)Einrichtung oder einer anderen (Unter-)Einrichtung in einer zweiten Folge paarweiser Verbindungen zwischen der Ausgangseinrichtung und einer schließlich erreichten Zieleinrichtung hervorzurufen.

7. Einrichtung nach Anspruch 6, die ein zweites Anforderungserzeugungsmittel umfaßt, um ein Anforderungssignal Mit Untereinrichtung verbunden? zu erzeugen, um zu prüfen, ob eine bestimmte (Unter-)Einrichtung aktiv ist, und wenn sie aktiv ist, zu prüfen, mit welchem Stecker einer anderen (Unter-)Einrichtung die bestimmte (Unter-)Einrichtung kommuniziert hat.

8. Einrichtung nach Anspruch 6 oder 7, die ein drittes Anforderungserzeugungsmittel umfaßt, um ein Anforderungssignal Mit Schaltkasten verbunden? zu erzeugen, um zu prüfen, ob ein bestimmter Stecker eines bestimmten Schaltkastenmittels mit einer anderen (Unter-) Einrichtung und einem anderen Stecker (anderen Steckern) dieser anderen (Unter-)Einrichtungen eine aktive Signalverbindung hat.

9. Einrichtung nach Anspruch 6, 7 oder 8, die eine Schaltkasten-Untereinrichtung und mindestens zwei weitere Untereinrichtungen umfaßt, wobei die weiteren Untereinrichtungen paarweise mit der Schaltkasten-Untereinrichtung über entsprechende Signalverbindungen verbunden sind und die Schaltkasten-Untereinrichtung eine Signalverbindung außerhalb der Einrichtung herstellt und Verbindungstabellenmittel mit einer Tabelle hat, die die mit der Einrichtung verbundene Untereinrichtung und das Steckerpaar angibt.

10. Schaltkastenmittel zur Verwendung in einem örtlichen Kommunikationsbussystem, das einen seriellen Steuerbus (60) umfaßt, der an eine Vielzahl von Einrichtungen (40-58) angeschlossen ist, die außerdem paarweise von Stecker zu Stecker durch entsprechende Signalverbindungen miteinander verbunden sind und mindestens ein Schaltkastenmittel mit mehreren Steckem (48, 50) enthalten, wobei dieses System einen Signalpfad zwischen einer Ausgangseinrichtung und einer Zieleinrichtung schafft und vorgibt, dadurch gekennzeichnet, daß es folgendes umfaßt:
- in jeder Einrichtung Verbindungstabellenmittel, die abfragbar Informationen über jede andere mit dieser Einrichtung paarweise verbundene Einrichtung und das Steckerpaar zur Verbindung der anderen Einrichtung speichert;
- in der Ausgangseinrichtung ein erstes Nachrichtengenerierungsmittel zum Generieren eines Nachrichtensteuerbefehls Verbinden im Steuerbus, wenn die Ausgangs- und die Zieleinrichtung nicht paarweise miteinander verbunden sind, der an das erste paarweise mit der Ausgangseinrichtung verbundene Schaltkastenmittel adressiert wird und die Zieleinrichtung angibt, und im Zusammenhang damit eines an die Zieleinrichtung adressierten Nachrichtensteuerbefehls Auswählen, um dieser die Herstellung der Verbindung zu signalisieren und vorzugeben;
- im Schaltkastenmittel Abfragemittel zur Abfrage seines Verbindungstabellenmittels (128) zum Identifizieren des mit der Zieleinrichtung verbundenen Steckers (falls vorhanden), und wenn dies erfolglos ist, Steuermittel (130) zum Steuern des Schaltkastenmittels als zweite Ausgangseinrichtung zum Erzeugen eines weiteren Steuerbefehls Verbinden an ein damit verbundenes zweites Schaltkastenmittel (48, 50).

## Revendications

1. Système omnibus local de communication comprenant un bus de commande série (60) fixé à une pluralité de dispositifs (40-58) qui sont, en outre interconnectés par paire de fiche à fiche par des interconnexions de signaux respectives et comprenant au moins un moyen à coffret de distribution à fiches multiples (48-50), ledit système permettant d'établir et de spécifier un chemin de signal entre un dispositif de source et un dispositif de destination et étant caractérisé par :
- dans chaque dispositif respectif, des moyens à table d'interconnexion stockant de manière interrogeable des informations désignant tout autre dispositif interconnecté par paire audit dispositif respectif et la paire de fiches interconnectant ainsi cet autre dispositif;
- dans ledit dispositif de source, un premier moyen générateur de messages pour générer, dans le cas où ledit dispositif de source et ledit dispositif de destination ne sont pas interconnectés par paire, sur ledit bus de commande une instruction de commande de Connexion à message dirigée vers n'importe quel premier moyen à coffret de distribution connecté par paire audit dispositif de source et désignant ledit dispositif de destination et, conjointement, une instruction de commande de Sélection à message dirigée vers ledit dispositif de destination pour y signaler et spécifier ledit établissement;
- dans le premier moyen à coffret de distribution ainsi sollicité des moyens d'interrogation pour interroger ses moyens à table d'interconnexion (128) afin d'identifier la fiche connectée audit dispositif de destination éventuel, et des moyens de commande (130) pour commander dans la négative ledit premier moyen à coffret de distribution comme dispositif de source secondaire pour produire une autre instruction de commande de Connexion vers un quelconque deuxième moyen à coffret de distribution qui y est connecté, jusqu'à ce qu'après une première séquence desdites instructions de commande de Connexion, le dispositif de destination soit atteint, ledit chemin étant ainsi identifié comme une deuxième séquence de ces interconnexions par paire, entre des paires de fiches associées, commençant par ledit dispositif de source et se terminant par ledit dispositif de destination, de sorte que ledit dispositif de destination est activé par ledit signal de commande de Sélection pour effectuer le transfert de signal prévu, ledit système comprenant des moyens d'activation pour activer dans un état d'initialisation lesdits moyens à table d'interconnexion.

2. Système onmibus local de communication selon la revendication 1, dans lequel le dispositif de source comporte un deuxième moyen générateur de messages pour générer sur ledit bus de commande une instruction de commande de Déconnexion à message vers ledit premier coffret de distribution et indiquer ledit dispositif de destination, et, conjointement avec cela, une première instruction de commande de Désélection à message pour ledit dispositif de destination, signalant ledit chemin de signal comme déconnectable et dans lequel le premier moyen à coffret de distribution ainsi sollicité comporte des moyens de répétition pour répéter ladite interrogation pour identifier ladite fiche à libérer et, dans la négative, générer une autre instruction de commande de Déconnexion vers ledit autre moyen à coffret de distribution jusqu'à ce que ledit chemin soit réidentifié pour libérer un dispositif quelconque situé à l'intérieur dudit chemin, en sorte de désactiver ledit dispositif de destination par rapport audit chemin.

3. Système selon la revendication 1 ou 2, dans lequel ledit premier moyen générateur de messages comprend un premier moyen de production pour produire une instruction de Connexion spécifiant un chemin de signal prévu entre une fiche particulière d'un sous-dispositif à coffret de distribution et un (sous)dispositif de destination particulier, et un deuxième moyen de production pour produire une instruction de Sélection informant ledit (sous)dispositif de destination d'un transfert de signal prévu, et spécifiant ledit transfert.

4. Système selon la revendication 2, dans lequel ledit deuxième moyen générateur de messages comprend un troisième moyen de production pour produire une instruction de Déconnexion spécifiant un chemin de signal susceptible d'être abandonné entre une fiche particulière d'un (sous)dispositif à coffret de distribution et un (sous)dispositif de destination particulier, un quatrième moyen de production pour produire une instruction de Désélection de sous-dispositif informant le (sous)dispositif de destination d'un transfert de signal susceptible de se terminer, et un cinquième moyen de production pour produire une instruction de Désélection de fiche informant un moyen à coffret de distribution particulier d'un transfert de signal susceptible de se terminer par rapport à une fiche particulière de ce dernier moyen à coffret de distribution.

5. Système selon l'une quelconque des revendications 1 à 4, dans lequel ledit bus de commande série est un bus monocanal.

6. Dispositif susceptible d'être utilisé comme dispositif de source dans un système omnibus local de communication comprenant un bus de commande série (60) fixé à une pluralité de dispositifs (40-58) qui sont par ailleurs interconnectés par paire fiche à fiche par des interconnexions de signal respectives et comprennent au moins un moyen à coffret de distribution à fiches multiples (48-50), ledit système d'établissement et de spécification d'un chemin de signal entre un dispositif de source et un dispositif de destination étant caractérisé en ce qu'il comprend :
- dans chaque dispositif respectif, des moyens à table d'interconnexion stockant de manière interrogeable des informations indiquant tout autre dispositif interconnecté par paire audit dispositif respectif, et la paire de fiches interconnectant de la sorte cet autre dispositif;
- ledit dispositif de source comprenant un premier moyen générateur de messages pour générer, dans le cas où ledit dispositif de source et ledit dispositif de destination ne sont pas interconnectés par paire, sur ledit bus de commande une instruction de commande de Connexion à message dirigé vers n'importe quel premier moyen à coffret de distribution connecté par paire audit dispositif de source et indiquant ledit dispositif de destination et, conjointement à cela, une instruction de commande de Sélection dirigée vers ledit dispositif de destination pour y signaler et y spécifier ledit établissement, et
- dans lequel ledit premier moyen générateur de messages comporte un moyen producteur de demandes pour, après ladite instruction de commande, produire de manière persistante un signal de demande Connecté pour recevoir une réponse positive ou négative dudit (sous)dispositif de destination ou de tout autre (sous)dispositif dans une deuxième séquence d'interconnexion par paire entre le dispositif de source et un dispositif de destination finalement atteint.

7. Dispositif selon la revendication 6, comprenant un deuxième moyen de production de demandes pour produire un signal de demande Connecté à un dispositif pour chercher une activité d'un (sous)dispositif particulier et, dans une situation d'activité, rechercher avec quelles fiches de quel autre (sous)dispositif, le (sous)dispositif particulier communique.

8. Dispositif selon la revendication 6 ou 7, comprenant un troisième moyen producteur de demandes pour produire un signal de demande Connecté à un coffret de distribution afin de rechercher une fiche particulière d'un moyen à coffret de distribution particulier pour lequel un autre (sous)dispositif et la ou les autres fiches de ces autres sous-dispositifs, la fiche particulière a une interconnexion de signal active.

9. Dispositif selon la revendication 6, 7 ou 8, comprenant un sous-dispositif à coffret de distribution et au moins deux autres sous-dispositifs, lesdits autres sous-dispositifs étant connectés par paire audit sous-dispositif à coffret de distribution à leur interconnexion de signal respectif, ledit sous-dispositif à coffret de distribution réalisant n'importe quelle connexion de signal à l'extérieur dudit dispositif, ledit sous-dispositif à coffret de distribution ayant des moyens à table d'interconnexion contenant une table indiquant n'importe quel sous-dispositif et paire de fiches interconnectés à l'intérieur dudit dispositif.

10. Moyen à coffret de distribution susceptible d'être utilisé dans un système omnibus local de communication comprenant un bus de commande série (60) fixé à une pluralité de dispositifs (40-58) qui sont par ailleurs interconnectés par paire fiche à fiche par des interconnexions de signal respectives et comprennent au moins un moyen à coffret de distribution à fiches multiples (48, 50), ledit système d'établissement et de spécification d'un chemin de signal entre un dispositif de source et un dispositif de destination étant caractérisé en ce qu'il comprend :
- dans chaque dispositif respectif, des moyens à table d'interconnexion stockant de manière interrogeable des informations indiquant tout autre dispositif interconnecté par paire audit dispositif respectif, et la paire de fiches interconnectant de la sorte cet autre dispositif;
- dans ledit dispositif de source, un premier moyen générateur de messages pour générer, dans le cas où ledit dispositif de source et ledit dispositif de destination ne sont pas interconnectés par paire, sur ledit bus de commande une instruction de commande de Connexion à message dirigée vers un quelconque premier moyen à coffret de distribution connecté par paire audit dispositif de source et indiquant ledit dispositif de destination et, conjointement avec cela, une instruction de commande de Sélection dirigée vers ledit dispositif de destination pour y signaler et y spécifier ledit établissement, et
- le moyen à coffret de distribution comprenant des moyens d'interrogation pour interroger son moyen à table d'interconnexion (128) pour identifier la fiche connectée audit dispositif de destination éventuel, et des moyens de commande (130) pour, dans la négative, commander ledit moyen à coffret de distribution comme dispositif de source secondaire pour produire une autre instruction de commande de Connexion vers n'importe quel deuxième moyen à coffret de distribution (48, 50) qui y est connecté.
